# EUROPÄISCHE PATENTSCHRIFT

(11) **EP 1 053 130 B1**
(45) Veröffentlichungstag und Bekanntmachung des Hinweises auf die Patenterteilung: **04.12.2002**
(21) Anmeldenummer: 99908840.4
(22) Anmeldetag: 03.02.1999
(51) Int. Cl.: B60R 19/24, B62D 27/02

(54) **ANORDNUNG ZUR BEFESTIGUNG EINES ANBAUTEILS AN EINER KAROSSERIE EINES FAHRZEUGS**
DEVICE FOR FIXING AN ATTACHMENT TO A BODY OF A VEHICLE
DISPOSITIF POUR LA FIXATION D'UN ELEMENT RAPPORTE SUR LA CARROSSERIE D'UN VEHICULE

(30) Priorität: 11.02.1998 DE 19805384
(43) Veröffentlichungstag der Anmeldung: 22.11.2000
(73) Patentinhaber: Dynamit Nobel Kunststoff GmbH, 91781 Weissenburg (DE)
(72) Erfinder: FISCHER, Carola, D-71034 Böblingen (DE); KLEINER, Horst, D-70499 Stuttgart (DE); PREISSLER, Dietmar, D-91781 Wei enburg (DE); SAUTNER, Anton, D-91757 Treuchtlingen (DE)
(74) Vertreter: Scherzberg, Andreas, Dr.
(86) Internationale Anmeldenummer: EP9900713
(87) Internationale Veröffentlichungsnummer: WO99041109

(56) Entgegenhaltungen:
- EP-A- 0 417 654
- EP-A- 0 611 682
- WO-A-96/08393
- DE-A- 4 332 286
- FR-A- 2 758 509
- PATENT ABSTRACTS OF JAPAN vol. 008, no. 061 (M-284), 23. März 1984 & JP 58 211942 A (NISSAN JIDOSHA KK), 9. Dezember 1983

## Beschreibung

Die Erfindung betrifft eine Anordnung zur Befestigung eines Stoßfängers an einer Fahrzeugkarosserie der im Oberbegriff des Anspruchs 1 angegebenen Gattung.

Bei einer bekannten Anordnung zur Befestigung eines als Stoßfänger ausgebildeten Anbauteils an einer Fahrzeugkarosserie (EP 0 417 654 B1) ist das Trägerteil mittels Dübel an der Karosserie befestigt und weist zwei von der Befestigungsebene abstehende Schenkel auf, die eine keilförmig sich erweiternde Öffnung begrenzen. Der obere Schenkel liegt an der einwärts verlaufenden Karosseriewand an und trägt auf der davon abgekehrten Schenkelinnenseite eine Verzahnung, in die eine entsprechend ausgebildete Verrippung am Anbauteil eingreift. Der untere Schenkel bildet eine schiefe Ebene, auf der sich ein Klemmkeil abstützt. In dem Klemmkeil ist eine an der Karosseriewand axial unverschieblich festgelegte Klemmschraube verschraubt. Nach Einsetzen des Anbauteils in die Schenkelöffnung derart, dass die Verrippung über der Zahnleiste liegt, wird mittels der Klemmschraube der Klemmkeil axial in die Schenkelöffnung eingezogen, wobei er auf der schiefen Ebene des unteren Schenkels gleitet und zunehmend die Verrippung am Anbauteil in die Verzahnung im oberen Schenkel kraftschlüssig eindrückt. Der Schraubenkopf der Klemmschraube liegt auf der Rückseite der Karosseriewand und ist relativ schwer zugänglich, was die Montage nicht unerheblich erschwert.

Die gattungsbildende WO 96/08393 zeigt eine Anordnung zur Befestigung eines Stoßfängers an einer Fahrzeugkarosserie mit mindestens einem an der Karosserie befestigten, langgestreckten Trägerteil, auf das ein Anbauteil des Stoßfängers aufsetzbar ist und das eine der Festlegung des Anbauteils dienende, in Aufsetzrichtung des Anbauteils ansteigend ausgebildete, schiefe Ebene aufweist, auf der sich ein an dem Anbauteil angeordneter Gleitfuß abstützt, und mit einer zwischen Trägerteil und Anbauteil wirksamen Clipsverbindung, deren Clipselemente nach einem Verschiebeweg des Gleitfußes auf der schiefen Ebene selbsttätig miteinander verrasten.

Viele Karosserien von Kraftfahrzeugen sind im Bereich der Front- und Heckflächen für die Anordnung eines formintegrierten Stoßfängers bzw. dessen in die Karosserieform integrierten Verkleidung tief eingezogen. Aus ästhetischen Gesichtspunkten darf zwischen der Oberseite der Stoßfängerverkleidung und dem einwärts verlaufenden Bereich der Karosseriewand kein Spalt auftreten. Da jede Karosserie Fertigungstoleranzen hat, ist auch die Spaltbildung einer entsprechenden Toleranz unterworfen, die bei der Montage des Stoßfängers ausgeglichen werden muss. Hinzu kommt, dass die Befestigungselemente für den Stoßfänger unsichtbar sein müssen, was die Montage nicht unerheblich erschwert.

Der Erfindung liegt die Aufgabe zugrunde, eine Anordnung der eingangs genannten Art in Hinblick auf eine erleichterte und kostengünstige Montage eines formintegrierten Stoßfängers zu verbessern.

Die Aufgabe ist durch die Merkmale des Patentanspruchs 1 gelöst.

Die erfindungsgemäße Anordnung hat den Vorteil, dass bei der Stoßfängermontage der gewünschte flachbündige, spaltlose Übergang zwischen Karosserie und Stoßfänger ohne Justiermaßnahmen erreicht wird und außerdem ein Verschraubvorgang, noch dazu von einer relativ schwer zugänglichen Stelle aus, einspart wird. Dies wirkt sich günstig auf die Qualität des Montageergebnisses und auf Montagezeit und Arbeitsergonomie aus.

Vorteilhafte Ausführungsformen der erfindungsgemäßen Anordnung mit zweckmäßigen Weiterbildungen und Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen:
- Fig. 1: einen Querschnitt eines formintegrierten Stoßfängers mit einer Anordnung zu dessen Befestigung an einer Karosserie eines Fahrzeugs in der Schnittebene I-I in Fig. 2,
- Fig. 2: ausschnittweise eine perspektivische Darstellung des Stoßfängers mit Befestigungsanordnung in Fig. 1,
- Fig. 3: ausschnittweise einen Querschnitt des Stoßfängers mit Befestigungsanordnung in der Schnittebene III-III in Fig. 2.

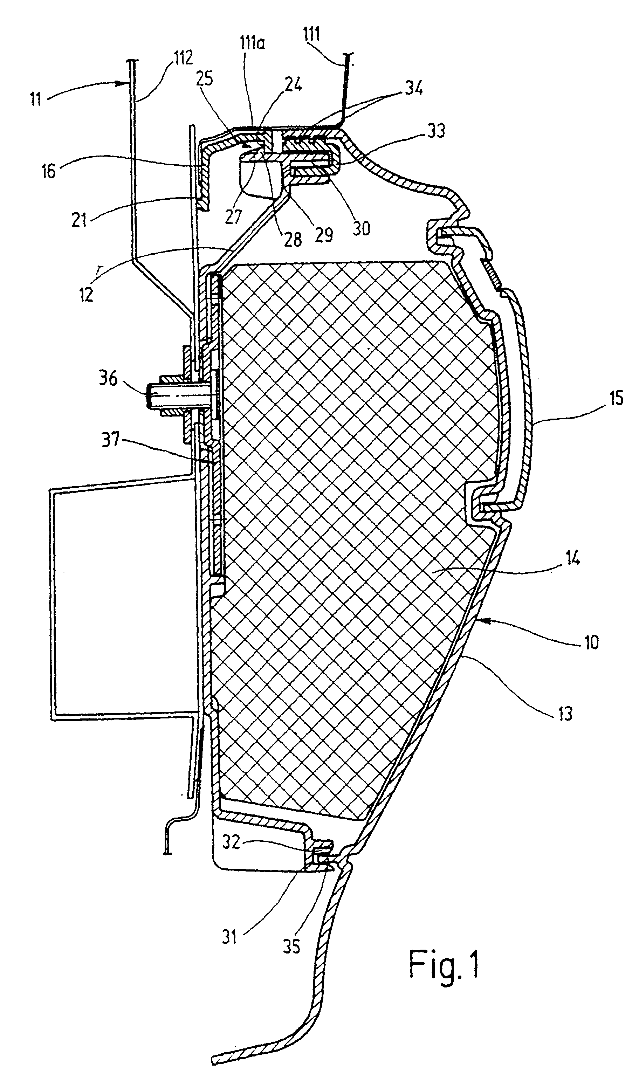

In Fig. 1 ist im Querschnitt ein formintegrierter Stoßfänger 10 mit einer Anordnung zu seiner Befestigung an einer Karosserie 11 eines Fahrzeugs dargestellt, wobei der Stoßfänger 10 ein spezielles Ausführungsbeispiel für ein allgemeines Anbauteil ist. Mit 111 und 112 sind zwei Karosseriewände der Karosserie 11 bezeichnet, die durch eine tiefe Einziehung der Karosseriewand 111 zusammengeführt und miteinander verbunden sind. Im Bereich 111a der tiefen Einziehung der Karosseriewand 111 ist der Stoßfänger 10 formintegriert befestigt. Der Stoßfänger 10 besteht aus einem Rückenteil 12,
das das Anbauteil für die Karosseriebefestigung darstellt, aus einer vorgewölbten Verkleidung 13, die auf das Rückenteil 12 aufgesteckt ist, und einem zwischen Rückenteil 12 und Verkleidung 13 einliegenden und beide gegeneinander abstützenden Formstück 14 aus einem energieverzehrenden Material. Auf die Verkleidung 13 ist in deren am weitesten vorgewölbten Bereich eine Schutzleiste 15 aufgesteckt, die leicht auswechselbar ist und zur Verhinderung von Lackschäden an der Verkleidung 13 bei geringfügigen Stoßberührungen dient.

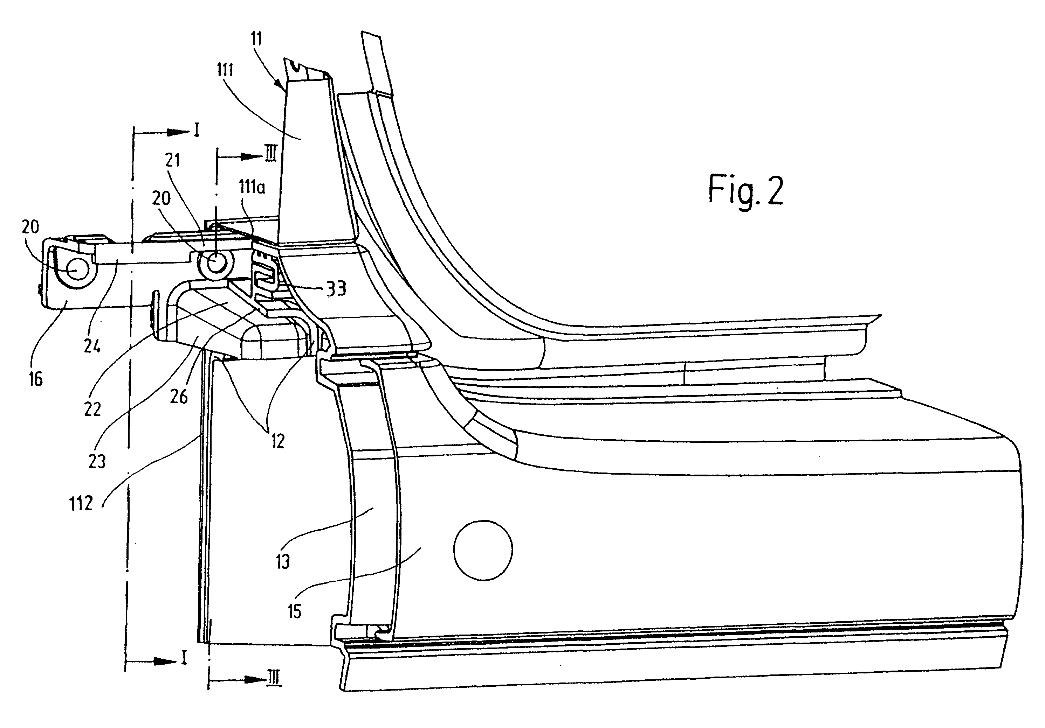

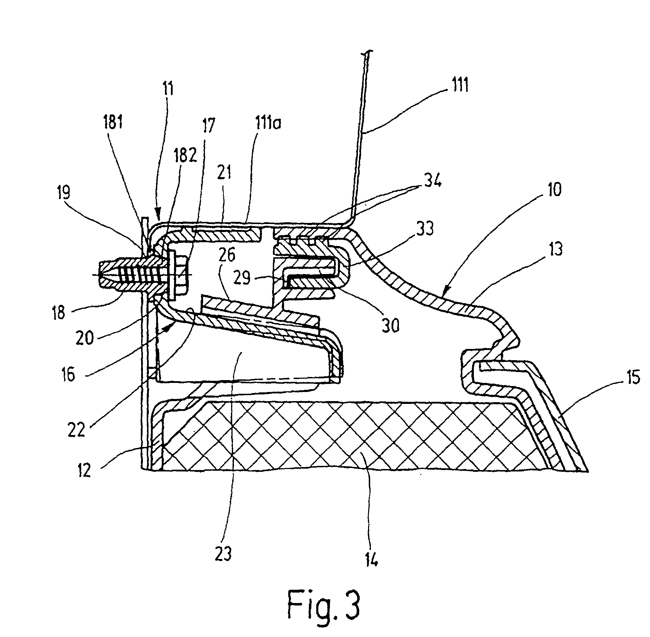

Zum Anbau des Stoßfängers 10 ist an der Karosserie ein Trägerteil 16 befestigt, auf das das Rückenteil 12 des Stoßfängers 10 von vorn her aufgesetzt wird. Wie in Fig. 3 zu sehen ist, erfolgt die Befestigung des Trägerteils 16 mittels Dübelschrauben 17, die in Dübel 18 eingeschraubt sind. Die Dübel 18, die durch Bohrungen 19 in der Karosseriewand 111 eingesteckt sind, tragen einen Ringflansch 181, mit dem sie sich an der Karosseriewand 111 abstützen, so daß sie nicht durch die Bohrung 19 hindurchgedrückt werden können. Ein über den Ringflansch 181 vorstehender Dübelkopf 182 tritt dabei teilweise in eine Bohrung 20 im Trägerteil 16 ein. Die durch die Bohrung 20 hindurch in den Dübel 18 eingeschraubte Dübelschraube 16 weitet den Dübel 18 auf und bewirkt eine Verklemmung des Dübels 18, so daß das Trägerteil 16 an der Karosseriewand 111 festgelegt ist. Wie Fig. 2 zeigt, sind zur Befestigung des Trägerteils 16 zwei Bohrungen 20 vorgesehen, durch welche jeweils eine Dübelschraube 17 hindurchgeführt wird.

Wie aus Fig. 2 und 3 hervorgeht, weist das Trägerteil 16 einen Schenkel 21, der sich an den eingezogenen Bereich 111a der Karosseriewand 111 anlegt, sowie eine diesem Schenkel 21 gegenüberliegende schiefe Ebene 22 auf, die in Einsetzrichtung des Rückenteils 12 ansteigend ausgebildet ist. Die schiefe Ebene 22 wird von der Außenfläche eines in Fig. 2 perspektivisch zu sehenden Hohlkörpers 23 gebildet, der einstückig am Trägerteil 16 angeformt ist. Wie Fig. 1 zeigt, ist an dem der schiefen Ebene 22 mit Abstand gegenüberliegenden Schenkel 21 des Trägerteils 16 eine Rastschulter 24 einer zwischen dem Trägerteil 16 und dem Rückenteil 12 wirksamen Clipsverbindung 25 angeordnet, die an dem Schenkel 21 einstückig angeformt ist und von diesem rechtwinklig absteht. Die Rastschulter 24 ist dabei im Längsabstand von der schiefen Ebene 22 angeordnet.

Am Rückenteil 12 ist ein mit der schiefen Ebene 22 korrespondierender Gleitfuß 26 angeordnet, der beim Aufsetzen des Rückenteils 12 auf das Trägerteil 16 sich auf der schiefen Ebene 22 abstützt. Wie nur aus Fig. 1 erkennbar ist, ist weiterhin am Rückenteil 12 eine Zunge 27 angeformt, die eine den rückenteilseitigen Teil der Clipsverbindung 25 bildende, rechtwinklig abstehende Rastnase 28 zum Hintergreifen der Rastschulter 24 trägt. Wird nunmehr das Rückenteil 12 auf das an der Karosserie 11 befestigte Trägerteil 16 aufgesetzt, so legt sich der Gleitfuß 26 auf die schiefene Ebene 22 auf. Das Rückenteil 12 ist nun in Richtung Trägerteil 16 weiterzuschieben, bis nach einem Verschiebeweg des Gleitfußes 26 die Clipselemente 24,28 der Clipsverbindung 25 selbsttätig miteinander verrasten, also die Rastnase 28 an der Zunge 27 hinter die Rastschulter 24 am Schenkel 21 einfällt. Die Anzahl der an dem Rückenteil 12 vorhandenen Gleitfüße 26 entspricht der Anzahl der an der Karosserie 11 befestigten Trägerteile 16, wie ein solches in Fig. 2 perspektivisch zu sehen ist.

Das Rückenteil 12 des Stoßfängers 10 hat im Bereich der Clipsverbindung 25 ein im Querschnitt T-förmiges Profil, wie dies aus Fig. 1 ersichtlich ist. Der in Aufsetzrichtung des Rückenteils 12 vorn liegende Teil des Querstegs des Profils bildet die Zunge 27, an der die Rastnase 28 der Clipsverbindung 25 einstückig ausgebildet ist. Der von der Aufsetzrichtung weg weisende Teil des Querstegs des T-Profils bildet zusammen mit einem am Mittelsteg des T-Profils
einstückig angefomten Paralfetschenkel eine im Querschnitt U-förmige, rinnenartige Steckaufnahme 29 für das Verkleidungsteil 13 des Stoßfängers 10. Innerhalb der Steckaufnahme 29 sind noch Querrippen 30 ausgebildet, deren Rippenhöhe etwa der halben Höhe der Steckaufnahme 29 entspricht. Am unteren Teil des Rückenteils 12 ist eine ähnliche Steckaufnahme 31 für das Verkleidungsteil 13 ausgebildet (Fig. 1). Zum Erhalt eines anbaufähigen, vormontierten Bauteiles wird zunächst an ausgewählten Stellen jeweils eine U-förmige Verbindungsklammer 33 über oberseitig abragende Rippen 34 mittels eines Schweißvorganges mit dem Verkleidungsteil 13 verbunden. Danach wird unter Einschluß des energieabsorbierenden, aus einem Schaumstoff bestehenden Formstücks 14 und einer mit Befestigungsbolzen 36 versehenen Anschlußplatte 37 das Verkleidungsteil 13 zusammen mit den Verbindungsklammern 33 mit dem Rückenteil 12 verbunden, wobei einerseits der untere freie Schenkel jeder Verbindungsklammer 33 in die Steckaufnahme 29 eintaucht, sich an den Querrippen 30 abstützt und mittels nicht dargestellter, außerhalb der Zeichnungsebene der Fig. 1 und 3 angeordneter Rastnasen in zugeordnete Fenster des Rückenteils 12 einrastet und andererseits in gleicher Weise eine untere Verbindung des Befetigungssteges 35 in der Steckaufnahme 31 erfolgt.

Die so geschaffene vormontierte Baueinheit wird nun auf die an der Karosserie 11 befestigten Trägerteile 16 aufgeschoben, wobei unter Erhalt eines Nullspaltes zwischen dem Stoßfänger 10 und der Karosseriewand 111 durch federndes Nachgeben der Trägerteile 16 ein Aufgleiten der Gleitfüße 26 und letztendlich ein Verrasten der Zungen 27 in bereits beschriebener Weise erfolgt. Damit ist in einem nicht zugänglichen Bereich eine erste, durch Druckeinwirkung wieder lösbare Verbindung mit der Karosserie 11 geschaffen, die durch ein Fixieren der die Karosserie 11 durchdringenden Befestigungsbolzen 36 ergänzt wird.

## Patentansprüche

1. Anordnung zur Befestigung eines Stoßfängers (10) an einer Fahrzeugkarosserie (11) mit mindestens einem an der Karosserie (11) befestigten, langgestreckten Trägerteil (16), auf das ein Anbauteil (12) des Stoßfängers (10) aufsetzbar ist und das eine der Festlegung des Anbauteils dienende, in Aufsetzrichtung des Anbauteils ansteigend ausgebildete, schiefe Ebene (22) aufweist, auf der sich ein an dem Anbauteil (12) angeordneter Gleitfuß (26) abstützt, und mit einer zwischen Trägerteil (16) und Anbauteil (12) wirksamen Clipsverbindung (25), deren Clipselemente (24, 28) nach einem Verschiebeweg des Gleitfußes (26) auf der schiefen Ebene (22) selbsttätig miteinander verrasten, **dadurch gekennzeichnet, dass** das Anbauteil (12) ein langgestrecktes Rückenteil (12) des formintegrierten Stoßfängers (10) ist, auf dem ein zusammen mit dem Rückenteil (12) ein energieabsorbierendes Formstück (14) einschließendes, vorgewölbtes Verkleidungsteil (13) des Stoßfängers (10) aufgesteckt ist, und dass das Rückenteil (12) ein Profil aufweist, das im Bereich der Clipsverbindung (25) einen T-förmigen Querschnitt, an dessen Quersteg ein Rastelement (28) der Clipsverbindung (25) ausgebildet ist, und auf seiner von der Clipsverbindung (25) abgekehrten Seite eine unter Einbeziehung des Querstegs gebildete rinnenartige Steckaufnahme (29) für mit dem Verkleidungsteil (13) fest verbundene Verbindungsklammern (33) aufweist.

2. Anordnung nach Anspruch 1, **dadurch gekennzeichnet, dass** die Clipsverbindung (25) eine der schiefen Ebene (22) gegenüberliegende, am Trägerteil (16) ausgebildete Rastschulter (24) und eine am Rückenteil (12) ausgebildete Zunge (27) aufweist, die eine rechtwinklig abstehende Rastnase (28) zum Hintergreifen der Rastschulter (24) trägt.

3. Anordnung nach Anspruch 1 oder 2, **dadurch gekennzeichnet, dass** das Trägerteil (16) längsgestreckt ist und dass die schiefe Ebene (22) und die Rastschulter (24) im Längsabstand voneinander angeordnet sind.

4. Anordnung nach Anspruch 2 oder 3, **dadurch gekennzeichnet, dass** der in Aufsetzrichtung vorn liegende Teil des Querstegs im T-förmigen Querschnittsbereich die Zunge (27) bildet, an der die Rastnase (28) einstückig ausgebildet ist.

5. Anordnung nach einem der Ansprüche 1 bis 4, **dadurch gekennzeichnet, dass** zwischen dem Formstück (14) und dem Rückenteil (12) eine Anschlussplatte (37) mit senkrecht abstehenden Befestigungsbolzen (36) einliegt, die Rückenteil (12) und Karosserie (11) durchdringen und auf der vom Rückenteil (12) abgekehrten Rückseite der Karosserie (11) gegen Axialverschiebung fixiert sind.

## Claims

1. Arrangement for securing a bumper (10) to a body (11) of a vehicle, the arrangement having at least one longitudinally extended carrier portion (16) which is secured to the body (11) and onto which an attachment portion (12) of the bumper (10) can be mounted and which carrier portion (16) has an oblique plane (22) which is used to fix the attachment portion, is formed so as to rise in the direction in which the attachment portion is mounted and on which is supported a sliding foot (26) that is arranged on the attachment portion (12), and having a clip connection (25) which is effective between the carrier portion (16) and the attachment portion (12) and the clip elements (24, 28) of which connection automatically latch together after displacement of the sliding foot (26) on the oblique plane (22), **characterised in that** the attachment portion (12) is a longitudinally extended rear portion (12) of the shape-integrated bumper (10) pushed onto which there is a pre-arched covering portion (13) of the bumper (10) including, together with the rear portion (12), an energy-absorbing shaped piece (14), and **in that** the rear portion (12) has a profile section which in the region of the clip connection (25) has a T-shaped cross-section on the cross-web of which a stop element (28) of the clip connection (25) is formed and has on its side that is remote from the clip connection (25) a groove-like plug-receiver (29), which is formed with inclusion of the cross-web and is for connecting clamps (33) that are fixedly connected to the covering portion (13).

2. Arrangement according to claim 1, **characterised in that** the clip connection (25) has a stop shoulder (24), which lies opposite the oblique plane (22) and is formed on the carrier portion (16), and a tongue (27), which is formed on the rear portion (12) and bears a stop lug (28) which stands out at right angles for engagement behind the stop shoulder (24).

3. Arrangement according to claim 1 or 2, **characterised in that** the carrier portion (16) is longitudinally extended, and **in that** the oblique plane (22) and the stop shoulder (24) are arranged so as be longitudinally spaced apart from each other.

4. Arrangement according to claim 2 or 3, **characterised in that** the portion of the cross-web, lying at the front in the mounting direction, forms in the T-shaped cross-sectional region the tongue (27) on which the stop lug (28) is formed so as to be in one piece therewith.

5. Arrangement according to one of claims 1 to 4, **characterised in that**, lying between the shaped piece (14) and the rear portion (12), there is a connection plate (37) that has securing pins (36) which stand out perpendicularly, penetrate the rear portion (12) and the body (11) and are fixed on the rear side of the body (11) remote from the rear portion (12) to prevent axial displacement.

## Revendications

1. Dispositif pour la fixation d'un pare-chocs (10) sur une carrosserie (11) de véhicule, comprenant au moins une partie de support (16) allongée, fixée à la carrosserie (11), sur laquelle peut être emboîtée une partie de montage (12) du pare-chocs (10) et qui présente un plan incliné (22) servant au positionnement de la partie de montage, conformé pour s'élever dans le sens d'emboîtement de la partie de montage et servant d'appui à un patin (26) disposé sur la partie de montage (12), et un assemblage par encliquetage (25) qui est prévu entre la partie de support (16) et la partie de montage (12) et dont les éléments d'encliquetage (24, 28) coopèrent automatiquement par encliquetage à la fin d'une course de glissement du patin (26) sur le plan incliné (22), **caractérisé par le fait que** la partie de montage (12) est une partie arrière (12) allongée du pare-chocs (10) intégré à la carrosserie, partie arrière sur laquelle est emboîtée une partie d'habillage (13) du pare-chocs (10) qui est prébombée et enveloppe conjointement avec la partie arrière (12) une pièce moulée d'absorption d'énergie (14), et que la partie arrière (12) présente un profil comportant dans la zone de l'assemblage par encliquetage (25) une section en T sur la barre transversale de laquelle est formé un élément d'encliquetage (28) de l'assemblage par encliquetage (25), et sur le côté éloigné de l'assemblage par encliquetage (25) un logement (29) en forme de rainure défini conjointement avec la barre transversale, pour l'insertion d'agrafes d'assemblage (33) reliées rigidement à la partie d'habillage (13).

2. Dispositif suivant la revendication 1, **caractérisé par le fait que** l'assemblage par encliquetage (25) présente un épaulement d'encliquetage (24) formé sur la partie de support (16) à l'opposé du plan incliné (22) et une languette (27) formée sur la partie arrière (12) et portant un nez d'encliquetage (28) en saillie à angle droit pour s'engager derrière l'épaulement d'encliquetage (24).

3. Dispositif suivant la revendication 1 ou 2, **caractérisé par le fait que** la partie de support (16) est allongée et que le plan incliné (22) et l'épaulement d'encliquetage (24) sont espacés l'un de l'autre dans le sens de la longueur de la partie de support.

4. Dispositif suivant la revendication 2 ou 3, **caractérisé par le fait que** la partie de la barre transversale située vers l'avant dans le sens d'emboîtement forme, dans la zone de section en T, la languette (27) avec laquelle le nez d'encliquetage (28) est réalisé d'une seule pièce.

5. Dispositif suivant l'une des revendications 1 à 4, **caractérisé par le fait qu'**entre la pièce moulée (14) et la partie arrière (12) est intercalée une plaque de raccordement (37) portant des vis de fixation (36) en saille à angle droit qui traversent la partie arrière (12) et la carrosserie (11) et sont immobilisées en translation axiale sur le côté arrière de la carrosserie (11), éloigné de la partie arrière (12).
